# EUROPÄISCHE PATENTSCHRIFT

(11) **EP 3 356 717 B1**
(45) Veröffentlichungstag und Bekanntmachung des Hinweises auf die Patenterteilung: **27.11.2019**
(21) Anmeldenummer: 16775628.7
(22) Anmeldetag: 27.09.2016
(51) Int. Cl.: F16L 5/02, F16L 5/04, H02G 3/22, H02G 3/08

(54) **LEITUNGSDURCHFÜHRUNG ZUM DURCHFÜHREN VON LEITUNGEN DURCH EIN BAUTEIL**
CONDUIT FEED-THROUGH FOR FEEDING CONDUITS THROUGH A COMPONENT
PASSAGE DE CONDUITE DESTINE A PASSER DES CONDUITES A TRAVERS UN COMPOSANT

(30) Priorität: 29.09.2015 EP 15187323
(43) Veröffentlichungstag der Anmeldung: 08.08.2018
(73) Patentinhaber: Hilti Aktiengesellschaft, 9494 Schaan (LI)
(72) Erfinder: SCHULZ-HANKE, Wolfgang, 86836 Untermeitingen (DE)
(74) Vertreter: Hilti Aktiengesellschaft Corporate Intellectual Property
(86) Internationale Anmeldenummer: PCT/EP2016/072906
(87) Internationale Veröffentlichungsnummer: WO 2017/055241

(56) Entgegenhaltungen:
- EP-A1- 1 987 863
- EP-A1- 1 988 319
- WO-A1-96/07453
- US-A- 4 331 338
- US-A1- 2012 096 673

## Beschreibung

### Technisches Gebiet

Die Erfindung betrifft eine Leitungsdurchführung zum Hindurchführen einer Leitung durch ein Bauteil, insbesondere durch eine Gebäudewand bzw. Gebäudedecke. Insbesondere betrifft die vorliegende Erfindung allgemein Brandschutzmaßnahmen für die Durchführung von Leitungen durch ein Bauteil.

### Technischer Hintergrund

In Gebäuden und Anlagen müssen Leitungen, die durch ein Bauteil, wie z.B. durch eine Wand oder eine Decke, geführt werden, Anforderungen für den Brandschutz genügen. So gehört es zu einer grundlegenden Anforderung, dass Brandgase oder sogar Feuer das Bauteil nicht durchdringen dürfen, d.h. in einem Gebäude nicht von einem Raum in einen nächsten gelangen dürfen.

Aus diesem Grund ist es üblich, bei Leitungsdurchführungen durch Wände der sich zwischen der Leitung und einer Innenwand einer Durchgangsöffnung bestehende Zwischenraum mit einem flexiblen und starren Verfüllmaterial zu verfüllen, wie zum Beispiel mit Mörtel, PU-Steinen, Acrylatdichtmittel, Mineralwolle, insbesondere in Kombination mit Sprühbeschichtungen, und dergleichen.

Im Brandfall können aufgrund einer Hitzentwicklung Spannungen entstehen, die starke mechanische Kräfte zwischen der Wand und der hindurchgeführten Leitung bewirken. Dadurch kann relativer Versatz zwischen der Leitung und der Wand auftreten. Insbesondere kann es auch bei Erdbeben zu erheblichen Verschiebungen zwischen der Leitung und der Wand kommen. Da die Leitung in der Regel mit dem Verfüllmaterial fest verbunden ist, kann sich das Verfüllmaterial durch die auftretenden Spannungen ablösen, reißen oder brechen. Insbesondere eine relative Verschiebung der Leitung senkrecht zur Wand kann zu einem teilweisen oder vollständigen Ablösen des Verfüllmaterials von der Leitung und/oder von der Durchgangsöffnung bzw. zu einem Aufreißen des Verfüllmaterials führen. Durch die dadurch entstehenden Risse und Spalten wird die geforderte Gasundurchlässigkeit beeinträchtigt, so dass Brandgase und Feuer die zuvor gasdichte Durchgangsöffnung überwinden können. Daher ist der bisherige Ansatz des einfachen Verfüllens des Zwischenraums zwischen der Leitung und der Innenwand der Durchgangsöffnung mit einem Verfüllmaterial nicht optimal.

Marktübliche Kabelboxen sehen vor, die Leitung entweder durch eine Kombination aus festem Kunststoff und Abdichtungsmaterial zu führen, wodurch jedoch die relative Beweglichkeit der Leitung erheblich eingeschränkt ist, so dass bei starken Erschütterungen die Beschädigung der Kabelbox nahezu unvermeidlich ist und die Gasdichtigkeit nicht mehr gewährleistet ist.

Weiterhin können intumeszierende Lamellen vorgesehen sein, die zwar eine verbesserte Beweglichkeit der durchgeführten Leitung sicherstellen, aber keine ausreichende Rauchgasdichtigkeit aufweisen.

Aus der WO96/07453 A1 ist eine Brandschutzvorrichtung bekannt, die eine longitudinale und radiale Bewegung eines Rohres durch eine Öffnung in einer Trennwand ermöglicht.

Aus der US 4 331 338 A ist eine flexible, fluiddichte Dichtungsanordnung zum Abdichten des Spalts zwischen einem Kanal und einer Wand bekannt.

Die EP 1 988 319 A1 beschreibt eine Brandschottdichtungsanordnung ist zur Verwendung zwischen einer Brandwand und einem Eindringelement vorgesehen. Die Anordnung umfasst eine Primärdichtung, eine Sekundärdichtung und eine Vielzahl von Halteringen. Die primäre Dichtung ist so konfiguriert, dass sie eine primäre Abdichtung zwischen der Brandwand und dem eindringenden Element bereitstellt. Die sekundäre Dichtung ist so konfiguriert, dass sie eine sekundäre Dichtung zwischen der Brandwand und dem durchdringenden Element bereitstellt. Die sekundäre Dichtung ist von der primären Dichtung beabstandet positioniert, um dazwischen einen Dichtungshohlraum zu definieren.

Die EP 1 987 863 A1 offenbart eine Brandschottdichtungsanordnung zum Abdichten zwischen einer Brandwand und einem Durchdringungselement entwickelt, wobei die Anordnung eine flexible Kupplung umfasst, die so konfiguriert ist, dass sie eine Primärdichtung und eine Sekundärdichtung bereitstellt. Die primäre Dichtung befindet sich zwischen der Brandwand und dem eindringenden Element. Die sekundäre Dichtung ist so konfiguriert, dass sie eine sekundäre Dichtung zwischen der Brandwand und dem durchdringenden Element bereitstellt. Die sekundäre Dichtung ist mit der flexiblen Kupplung gekoppelt und von der flexiblen Kupplung beabstandet positioniert, um einen Dichtungshohlraum dazwischen zu definieren.

Die US2012/096673 A1 beschreibt eine tüllenartige Vorrichtung mit mindestens drei Schichten, die an einer größeren ebenen Fläche befestigt werden kann, um es einem Kabel oder einem anderen Objekt zu ermöglichen, sich senkrecht durch ein Loch in einer beweglichen Schicht dieser tüllenartigen Vorrichtung zu bewegen.

Ein weiterer Ansatz ist beispielsweise aus der Druckschrift DE 10 2008 000 420 A1 bekannt, in der eine Leitungsdurchführung offenbart ist, die einen geschlossenen Durchführraum für eine Leitung aufweist. Im Gehäuse der Leitungsdurchführung sind eine Einlage aus intumeszierendem Material sowie mindestens ein Dichtelement aus einem elastischen Material vorgesehen, um eine Abdichtung im Brandfall zu erreichen.

Aus der Druckschrift DE 10 2006 000 184 A1 ist eine Leitungsdurchführung zum Durchführen von Leitungen durch ein Bauteil bekannt. Die Leitungsdurchführung weist ein Hüllrohr und ein Basisteil auf, das an dem ersten axialen Ende des Hüllrohres angebracht ist und einen eine Durchführung umgebenden Aufnahmeraum für ein Abschottmittel umfasst. An dem ersten axialen Ende des Hüllrohrs ist weiterhin ein ringförmiges membranartiges Dichtelement angeordnet. An dem zweiten axialen Ende des Hüllrohres ist ein weiteres membranartiges Dichtelement angeordnet, um die Leitungsdurchführung abzudichten.

Es ist eine Aufgabe der vorliegenden Erfindung, eine Leitungsdurchführung bereitzustellen, mit der eine Leitung durch ein Bauteil, wie beispielsweise eine Wand oder eine Decke, geführt werden kann, so dass diese für Rauchgase in einem Brandfall dicht ist. Weiterhin soll eine Toleranz gegenüber Erschütterungen und relativen Verschiebungen zwischen der Leitung und dem Bauteil gewährleistet sein, so dass auch nach einer relativen Verschiebung die Dichtigkeit der Leitungsdurchführung nicht beeinträchtigt ist.

### Offenbarung der Erfindung

Diese Aufgabe wird durch die Leitungsdurchführung gemäß Anspruch 1 sowie eine Leitungsdurchführungsanordnung gemäß dem nebengeordneten Anspruch gelöst.

Weitere Ausgestaltungen sind in den abhängigen Ansprüchen angegeben.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

Die Begriffe "aufweisen", "mit" und "haben" sollen einschließend sein und bedeuten, dass auch andere als die genannten Elemente gemeint sein können.

Gemäß einem ersten Aspekt ist eine Leitungsdurchführung zum Durchführen einer Leitung durch ein Bauteil, insbesondere eine Wand oder eine Decke eines Gebäudes, vorgesehen. Die Leitungsdurchführung umfasst:
- eine insbesondere ebene Verschlussplatte zum Überdecken einer Durchgangsöffnung in dem Bauteil, wobei die Verschlussplatte mindestens eine Leitungsöffnung zur Aufnahme einer Leitung aufweist;
- eine an dem Bauteil befestigbare Befestigungsanordnung zum Halten der Verschlussplatte an der Durchgangsöffnung, so dass eine relative Verschiebung der Verschlussplatte entlang einer Flächenrichtung, insbesondere in alle Flächenrichtungen der Verschlussplatte zugelassen wird und die Verschlussplatte senkrecht zur Flächenrichtung der Verschlussplatte fixiert ist,
   dadurch gekennzeichnet, dass die Befestigungsanordnung mindestens eine Befestigungseinrichtung umfasst, wobei die Befestigungseinrichtung einen Fixierungsstift mit einem Schaft und einem Fixierungskopf aufweist, wobei der Schaft durch eine Befestigungsöffnung in der Verschlussplatte ragt und der Fixierungskopf die Befestigungsöffnung übergreift, um die Verschlussplatte zu halten.

Eine Idee der obigen Leitungsdurchführung besteht darin, einen gasdichten Verschluss für eine Durchgangsöffnung durch ein Bauteil bereitzustellen, bei dem eine relative Bewegung zwischen einer hindurchgeführten Leitung und der Durchgangsöffnung aufgenommen werden kann und gleichzeitig die Gasdichtigkeit beibehalten wird. Dies wird dadurch erreicht, dass die Verschlussplatte entlang von Richtungen parallel zu ihrer Flächenrichtung durch die Befestigungsanordnung beweglich gehalten ist aber in einer Richtung senkrecht hierzu fest bzw. unbeweglich gehalten ist.

Weiterhin kann die Leitungsöffnung mit einer Gleiteinrichtung versehen sein, so dass die Leitung durch die Leitungsöffnung gleitend und gasdicht geführt ist.

Dadurch wird erreicht, dass bei einer relativen Bewegung zwischen einer hindurchgeführten Leitung und der Durchgangsöffnung die Gleiteinrichtung den relativen Versatz in einer axialen Erstreckungsrichtung der Leitung, d.h. senkrecht zur Flächenrichtung der Verschlussplatte aufnimmt, so dass eine entsprechende Kraftbeaufschlagung auf die Leitungsdurchführung unterbunden werden kann. Dadurch kann verhindert werden, dass eine relative Bewegung der Leitung entlang ihrer Erstreckungsrichtung nicht zu einer Beschädigung oder zu einer Gasundichtigkeit der Leitungsdurchführung führt.

Insbesondere kann die Gleitreinrichtung eine Gleitfilmwicklung und/oder ein Gleitmittel aufweisen.

Gemäß einer Ausführungsform kann die Verschlussplatte an ihren Rändern oder an ihren Randbereichen mit einem Gleit- und Dichtungsmittel versehen sein, um eine Abdichtung zwischen der Verschlussplatte und einem Bereich des Bauteils zu erreichen und ein Gleiten der Verschlussplatte zuzulassen.

Es kann vorgesehen sein, dass die Verschlussplatte an ihren Rändern umlaufend abgebogen ist. Dies ermöglicht eine noch bessere Gasdichtigkeit zwischen der Verschlussplatte und dem Bauteil.

Weiterhin weist die Befestigungsanordnung mindestens eine Befestigungseinrichtung auf, wobei die Befestigungseinrichtung einen Fixierungsstift mit einem Schaft und einem Fixierungskopf aufweist, wobei der Schaft durch eine Befestigungsöffnung in der Verschlussplatte ragt und der Fixierungskopf die Befestigungsöffnung übergreift, um die Verschlussplatte zu halten. Dies stellt eine einfache Ausgestaltung der Befestigungseinrichtung dar.

Es kann weiterhin vorgesehen sein, dass der Querschnitt des Schaftes geringer ist als der Querschnitt der Befestigungsöffnung. Dadurch kann der zwischen Leitung und Verschlusselement zugelassene Verschiebungsweg definiert werden.

Gemäß einer Ausführungsform kann der Fixierungskopf eine Größe aufweisen, dass er die Verschlussplatte auch dann senkrecht zur Flächenrichtung der Verschlussplatte hält, wenn sich der Schaft an einem Rand der Befestigungsöffnung befindet.

Weiterhin kann der Fixierungskopf kreuzförmig, kreisförmig, oval, polygonförmig oder rechteckig sein. Alternativ oder zusätzlich kann die Befestigungsöffnung einen runden, ovalen, rechteckigen, polygonförmigen Querschnitt aufweisen. Gemäß einem weiteren Aspekt ist eine Leitungsdurchführungsanordnung vorgesehen, umfassend:
- ein Bauteil mit einer Durchgangsöffnung;
- die obige Leitungsdurchführung an einer Seite des Bauteils;
   wobei die Befestigungsanordnung mit dem Bauteil fest verbunden ist.

Gemäß einem weiteren Aspekt ist eine Leitungsdurchführungsanordnung vorgesehen, umfassend:
- ein Bauteil mit einer Durchgangsöffnung;
- mehrere der obigen Leitungsdurchführungen an mehreren Seiten des Bauteils;
wobei die Befestigungsanordnung mit dem Bauteil fest verbunden ist.

Dadurch, dass die Brandschutzplatte plan auf den die Bauteilöffnung umgebenden Flächenbereichen anliegt, ist die Bauteilöffnung im Brandfall gegenüber dem Durchtreten von Brandgasen abgedichtet.

Weiterhin kann ein Zwischenraum zwischen den Verschlussplatten der mehreren Leitungsdurchführungen als ein Hohlraum vorgesehen sein oder zumindest teilweise mit einem brandhemmenden oder nicht brennbaren Verfüllmaterial gefüllt sein.

Gemäß einer Ausführungsform können die Befestigungsöffnungen so in der Verschlussplatte angeordnet sein, dass eine Verschiebung der Verschlussplatte innerhalb eines durch die Positionierung der Schäfte der Fixierungsstifte in den Befestigungsöffnungen definierten Bewegungsspielraums nicht dazu führt, dass eine der Befestigungsöffnungen in den Bereich der Durchgangsöffnung gelangt.

### Kurzbeschreibung der Zeichnungen

Ausführungsformen werden nachfolgend anhand der beigefügten Zeichnungen näher erläutert. Es zeigen:
- Figur 1: eine Darstellung eines Wandausschnitts mit einer Durchgangsöffnung und einer hindurchgeführten Leitung;
- Figur 2: eine perspektivische Darstellung eines mit der Leitungsdurchführung versehenen Wandabschnitts; und
- Figur 3: eine Querschnittsdarstellung durch die Wandöffnung mit einer Leitungsdurchführung, die Brandschutzplatten an beiden Wandseiten aufweist.

### Beschreibung von Ausführungsformen

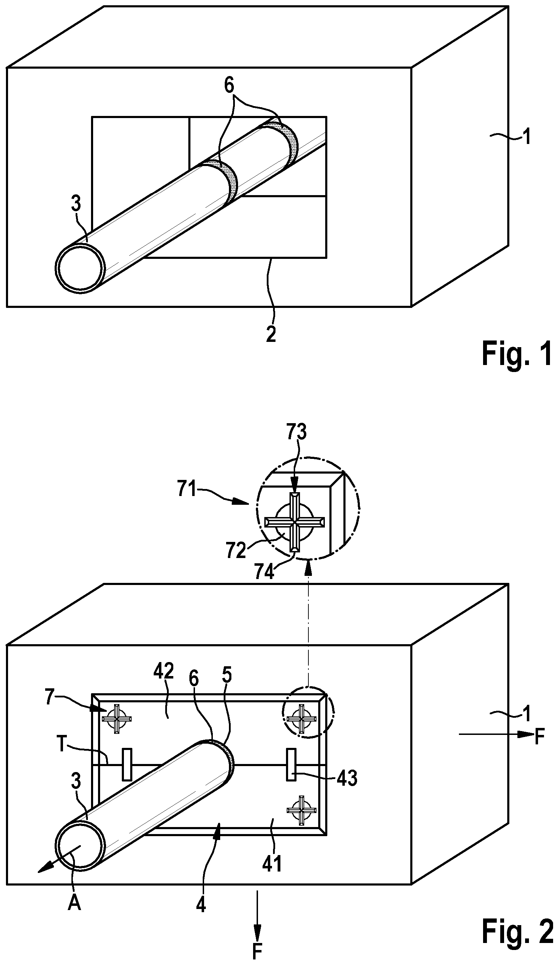

Figur 1 zeigt eine perspektivische Darstellung eines Abschnitts einer Wand 1 (oder eines sonstigen Bauteils) mit einer durch die Breite der Wand 1 durchgehenden Durchgangsöffnung 2. Durch die Durchgangsöffnung 2 ist eine Leitung 3 geführt. Die Leitung 3 kann ein Kabel, ein Kabelrohr, eine Rohrleitung, Rohrleitung, eine Kabeltrasse, ein Lüftungsrohr oder eine Lüftungsklappe, oder Vergleichbares sein.

Wie in der schematischen Darstellung der Figur 2 dargestellt, kann zum Verschließen der Durchgangsöffnung 2 eine ein- oder mehrteilige Verschlussplatte 4 vorgesehen sein, die die Durchgangsöffnung 2 flächig überdeckt und die auf den die Durchgangsöffnung 2 umgebenden Wandbereichen anliegt. Dadurch wird eine Abdichtung der Durchgangsöffnung 2 gegenüber Brandgasen und dergleichen erreicht.

Die Verschlussplatte 4 weist eine Leitungsöffnung 5 auf, die zur Aufnahme und Führung der Leitung 3 dient. Die Leitungsöffnung 5 weist dazu einen Querschnitt auf, der im Wesentlichen dem Querschnitt der Leitung 3 entspricht und gegenüber diesem nur wenig vergrößert ist, um keinen nennenswerten Durchlass für Brandgase zu bieten.

Zwischen der Mantelfläche der Leitung 3 und der Innenkante der Leitungsöffnung 5 kann eine Gleiteinrichtung 6 in Form einer Gleitfilmwicklung oder eines Gleitmittels vorgesehen sein, um ein Gleiten der Leitung 3 in axialer Erstreckungsrichtung A der Leitung bzw. im Idealfall in Richtung senkrecht zur Fläche der Brandschutzplatte 4 zu ermöglichen. Dadurch können im Falle von Erschütterungen aufgrund eines Erdbebens oder dergleichen Kräfte und relative Bewegungen in axialer Richtung A bzw. senkrecht zur Fläche der Brandschutzplatte bzw. senkrecht zur Außenfläche der Wand 1 nicht von der der Leitung 3 auf die Brandschutzplatte 4 übertragen werden. Weiterhin bewirkt die Gleiteinrichtung 6 eine verbesserte Gasdichtigkeit zwischen der Leitung 3 und der Leitungsöffnung 5 der Verschlussplatte 4.

Die Verschlussplatte 4 kann aus einem schwer entflammbaren oder nicht brennbaren Material, wie beispielsweise gefüllten Polyurethanplatten, Verbundwerkstoffen z. B. in Kombination mit Aluminium, oder Ähnlichem, ausgebildet sein.

Die Verschlussplatte 4 kann einteilig ausgebildet sein. Für die Einfachheit der Montage kann die Verschlussplatte 4 aber auch mehrteilig mit den Verschlussplattenteilen 41 und 42 ausgebildet sein. Eine Trennlinie T zwischen zwei der Verschlussplattenteile 41, 42 der Verschlussplatte 4 so durch die Leitungsöffnung 5 verläuft, dass die Leitungsöffnung 5 durch die Verschlussplattenteile 41, 42 ausgebildet wird und so die Verschlussplattenteile 41, 42 um die Leitung 3 herum angeordnet werden. Die einzelnen Verschlussplattenteile 41, 42 können anschließend mit Hilfe eines Klebers oder eines Verbindungselementes 43 miteinander verbunden werden, so dass diese selbst während einer Erschütterung, z.B. ausgelöst durch ein Erdbeben, aneinandergehalten werden, um die Leitung 3 in der Leitungsöffnung 5 gleitend führen zu können. Die einzelnen Verschlussplattenteile können zusätzlich brandschutztechnisch modifiziert sein.

Die Verschlussplatte 4 ist mit einer Befestigungsanordnung 7 versehen, die die Verschlussplatte 4 an der Wand 1 hält, so dass die Ränder bzw. die Randbereiche der Verschlussplatte 4 an den die Durchgangsöffnung 2 umgebenden Bereichen der Wand 1 anliegen. Dadurch wird die Durchgangsöffnung 2 durch die Verschlussplatte 4 dicht verschlossen.

Weiterhin liegt die Verschlussplatte 4 an den die Durchgangsöffnung 2 umgebenden Bereichen der Wand 1 so an, dass bei Einwirken von Kräften zwischen der Verschlussplatte 4 und der Leitung 3 quer (senkrecht) zur axialen Richtung A bzw. in Flächenrichtung F der Wand 1 ein Verschieben der Verschlussplatte 4 über der Durchgangsöffnung 2 zugelassen wird, ohne die Geometrie der Leitungsöffnung 5 zur Aufnahme der Leitung 3 zu verändern oder eine nennenswerte Kraft auf die Leitung 3 auszuüben.

Um eine verbesserte Gasdichtigkeit und Gleitfähigkeit zwischen der Verschlussplatte 4 und der Wand 1 zu erhalten, kann die Verschlussplatte 4 an ihren Rändern bzw. ihren Randbereichen auf der der Wand 1 zugewandten Seite mit einem Gleit- und Dichtungsmittel 8 versehen sein, einen etwaigen Durchlass zwischen der Wand 1 und der Verschlussplatte 4 zur Durchgangsöffnung 2 abdichtet und gleichzeitig eine reibungsärmere Bewegung der Verschlussplatte 4 in Flächenrichtung der Wand ermöglicht. Dadurch wird in verbesserter Weise gewährleistet, dass möglichst geringe Kräfte von der Verschlussplatte 4 auf die Leitung 3 übertragen werden. Das Gleit- und Dichtungsmittel kann das gegebenenfalls mit mindestens einem Brandschutzadditiv versetzt und/oder brandschutzrelevant modifiziert sein.

Alternativ oder zusätzlich kann die Verschlussplatte 4 an ihren Rändern in eine Richtung der Wand abgebogen sein, so dass die Verschlussplatte 3 mit ihren Rändern die Durchgangsöffnung 2 umgebend an der Wand 1 anliegt. Dadurch kann eine verbesserte Dichtigkeit zwischen der Verschlussplatte 4 und der Wand 1 erhalten werden und der Flächenbereich zum Aufbringen des Gleit- und Dichtungsmittel 8 verringert werden.

Die Befestigungsanordnung 7 ist in dem dargestellten Ausführungsbeispiel mit Hilfe von Befestigungseinrichtungen 71 vorgesehen. Die Befestigungseinrichtungen 71 sind ausgebildet, um eine Bewegung in Flächenrichtung F der Wand 1 zuzulassen und die Verschlussplatte 4 gegen eine Bewegung in der axialen Richtung A bzw. senkrecht zur Flächenrichtung F der Verschlussplatte 4 bzw. der Wand 1 zu halten.

Insbesondere kann die Verschlussplatte 4 vorzugsweise rechteckig ausgebildet sein, aber auch andere geometrische Formen aufweisen, und ein oder mehrere Befestigungseinrichtungen 71 in ihrem Randbereich angeordnet sein, so dass bei einer Anbringung der Verschlussplatte 4 über der Durchgangsöffnung 2 diese an den die Durchgangsöffnung 2 umgebenden Bereichen der Wand 1 befestigt sein können. Die Befestigungseinrichtungen 71 sind daher so angeordnet, dass sie bei auf die Durchgangsöffnung 2 aufgesetzten Verschlussplatte 4 außerhalb des Bereichs der Durchgangsöffnung 2 liegen, so dass eine Verankerung der Befestigungseinrichtungen 71 in der Wand 1 möglich ist.

Die Befestigungseinrichtung 71 umfasst eine Befestigungsöffnung 72 in der Verschlussplatte 4 und einen in der Wand zu verankernden Fixierungsstift 73. Der Fixierungsstift 73 weist im Bereich seines Schaftes 75 einen deutlich geringeren Querschnitt auf als die Befestigungsöffnung 72, so dass eine Bewegung der Brandschutzplatte 4 quer zur Erstreckungsrichtung der Fixierungsstifte möglich ist. Der Fixierungsstift 73 ist mit einem Fixierungskopf 74 versehen sind, der die Befestigungsöffnung 72 in der Verschlussplatte 4 auf der der Wand abgewandten Seite übergreift. Durch den Fixierungskopf 74 wird die Verschlussplatte 4 auch dann an der Wand gehalten, wenn sich dieser relativ zu dem in der Wand verankerten Fixierungsstift 73 seitlich bewegt.

Die Befestigungsöffnungen 72 können so in der Verschlussplatte 4 angeordnet sein, dass ein durch die Positionierung der Schäfte der Fixierungsstifte 72 in den Befestigungsöffnungen definierte Bewegungsspielraum nicht dazu führt, dass eine der Befestigungsöffnungen 72 in den Bereich der Durchgangsöffnung 2 gelangt.

Die Fixierungsköpfe 74 können kreuzförmig, kreisförmig, rechteckig oder gitterförmig ausgebildet sein und erstrecken sich ganz oder teilweise über die Befestigungsöffnung 72. Insbesondere weist der Fixierungskopf 74 eine Größe in Richtung quer zum Schaft 75 des Fixierungsstiftes 73 auf, die ausreicht, um die Verschlussplatte 4 zu halten ungeachtet der Position des Schaftes 75 in der Befestigungsöffnung 72.

Vorzugsweise werden bei der ersten Montage die Schafte 75 der Fixierungsstifte 73 so angeordnet, dass sich diese mittig in den Befestigungsöffnungen 73 der Verschlussplatte 4 befinden, wenn die Verschlussplatte 4 mittig bzw. mit ausreichend Bewegungsspielraum nach allen Flächenrichtungen der Wand 1 auf die Durchgangsöffnung 2 aufgesetzt ist. Dadurch kann gewährleistet werden, dass ein seitlicher Versatz der Verschlussplatte 4 relativ zu den Fixierungsstiften 73 bzw. relativ zu der Durchgangsöffnung 2 in jede Richtung in gleichem Maße möglich ist.

Durch die Befestigungsanordnung 7 ist es möglich, auch seitliche Bewegungen zwischen Wand 1 und der Leitung 3 durch die Beweglichkeit der Verschlussplatte 4 entlang der Wand 1 bzw. über der Durchgangsöffnung 2 aufzunehmen. Durch die Wahl von ausreichenden Querschnittsflächen der Befestigungsöffnungen 72 bezüglich der Querschnitte der Schafte 75 der Fixierungsstifte 73 kann der mögliche Verschiebungsweg, der im Falle z.B. eines Erdbebens aufgenommen bzw. kompensiert werden kann, definiert werden. Dadurch, dass die Verschlussplatte 4 während einer solchen Verschiebung nicht gestaucht oder verzogen wird, kann diese extrem schnelle Bewegungen aufnehmen, ohne bleibende Stauchungs- oder Streckungsschäden zu erhalten, die zu Gasundichtigkeiten führen könnten.

Der Fixierungskopf 74 kann mit einer Brandschutzbeschichtung versehen werden, die gewährleistet, dass die Fixierungsstifte 72 während eines Brandes aufgrund der Hitze nicht erweichen und dadurch die Befestigung der Verschlussplatte 4 gefährden.

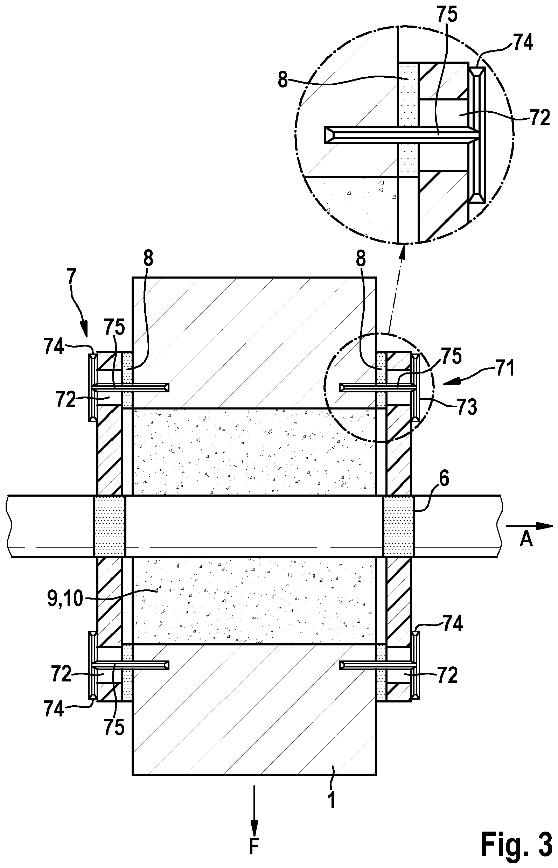

In Figur 3 ist eine Querschnittsdarstellung durch eine Leitungsdurchführungsanordnung dargestellt, bei der eine Durchgangsöffnung 2 durch die Wand 1 an beiden Seiten durch eine der oben beschriebenen Leitungsdurchführungen verschlossen ist. Der dadurch in der Wand 1 entstehende Hohlraum 9 zwischen der Leitung 3 und der Innenwand der Durchgangsöffnung 2 kann ungefüllt verbleiben oder in herkömmlicher Weise mit einem nicht brennbaren oder brandhemmenden Verfüllmaterial 10, insbesondere durch einen nicht entflammbaren oder schwer brennbaren Mörtel, Acrylatdichtmittel oder Mineralwolle, insbesondere in Kombination mit nicht entflammbaren Sprühbeschichtungen, gefüllt werden.

## Patentansprüche

1. Leitungsdurchführung zum Durchführen einer Leitung (3) durch ein Bauteil (1), insbesondere eine Wand oder eine Decke eines Gebäudes, umfassend:
- eine Verschlussplatte (4) zum Überdecken einer Durchgangsöffnung (2) in dem Bauteil (1), wobei die Verschlussplatte (4) mindestens eine Leitungsöffnung (5) zur Aufnahme der Leitung (3) aufweist;
- eine an dem Bauteil befestigbare Befestigungsanordnung (7) zum Halten der Verschlussplatte (4), so dass eine relative Verschiebung der Verschlussplatte (4) entlang einer Flächenrichtung (F) der Verschlussplatte (4) zugelassen wird und die Verschlussplatte (4) senkrecht zur Flächenrichtung (F) der Verschlussplatte (4) fixiert ist,
**dadurch gekennzeichnet, dass** die Befestigungsanordnung (7) mindestens eine Befestigungseinrichtung (71) umfasst, wobei die Befestigungseinrichtung (71) einen Fixierungsstift (73) mit einem Schaft (75) und einem Fixierungskopf (74) aufweist, wobei der Schaft (75) durch eine Befestigungsöffnung (72) in der Verschlussplatte (4) ragt und der Fixierungskopf (74) die Befestigungsöffnung (72) übergreift, um die Verschlussplatte (4) zu halten.

2. Leitungsdurchführung nach Anspruch 1, wobei die Leitungsöffnung (5) mit einer Gleiteinrichtung (6) versehen ist, so dass die Leitung (3) durch die Leitungsöffnung (5) gleitend und gasdicht geführt ist.

3. Leitungsdurchführung nach Anspruch 2, wobei die Gleitreinrichtung (6) eine Gleitfilmwicklung und/oder ein Gleitmittel aufweist.

4. Leitungsdurchführung nach einem der Ansprüche 1 bis 3, wobei die Verschlussplatte (4) an ihren Rändern oder an ihren Randbereichen mit einem Gleit- und Dichtungsmittel (8) versehen ist, um eine Abdichtung zwischen der Verschlussplatte (4) und einem Bereich des Bauteils zu erreichen und ein Gleiten der Verschlussplatte (4) zuzulassen.

5. Leitungsdurchführung nach einem der Ansprüche 1 bis 4, wobei die Verschlussplatte (4) an ihren Rändern umlaufend abgebogen ist.

6. Leitungsdurchführung nach einem der Ansprüche 1 bis 5, wobei der Querschnitt des Schaftes (75) geringer ist als der Querschnitt der Befestigungsöffnung (72).

7. Leitungsdurchführung nach einem der Ansprüche 1 bis 6, wobei der Fixierungskopf (74) eine Größe aufweist, dass er die Verschlussplatte (4) auch dann senkrecht zur Flächenrichtung (F) der Verschlussplatte (4) hält, wenn sich der Schaft (75) an einem Rand der Befestigungsöffnung (72) befindet.

8. Leitungsdurchführung nach einem der Ansprüche 1 bis 7, wobei der Fixierungskopf (74) kreuzförmig, kreisförmig, oval, polygonförmig oder rechteckig ist, und/oder wobei die Befestigungsöffnung (72) einen runden, ovalen, rechteckigen, polygonförmigen Querschnitt aufweist.

9. Leitungsdurchführungsanordnung, umfassend:
- ein Bauteil (1) mit einer Durchgangsöffnung (2);
- eine Leitungsdurchführung nach einem der Ansprüche 1 bis 8 an einer Seite des Bauteils (1);
wobei die Befestigungsanordnung (7) mit dem Bauteil (1) fest verbunden ist.

10. Leitungsdurchführungsanordnung, umfassend:
- ein Bauteil (1) mit einer Durchgangsöffnung (2);
- mehrere Leitungsdurchführungen nach einem der Ansprüche 1 bis 8 an mehreren Seiten des Bauteils (1);
wobei die Befestigungsanordnung (7) mit dem Bauteil (1) fest verbunden ist.

11. Leitungsdurchführungsanordnung nach Anspruch 10, wobei ein Zwischenraum zwischen den Verschlussplatten (4) der mehreren Leitungsdurchführungen als ein Hohlraum (9) vorgesehen ist oder zumindest teilweise mit einem brandhemmenden oder nicht brennbaren Verfüllmaterial (10) gefüllt ist.

12. Leitungsdurchführungsanordnung nach einem der Ansprüche 9 bis 11, wobei die Befestigungsöffnungen (72) so in der Verschlussplatte (4) angeordnet sind, dass eine Verschiebung der Verschlussplatte (4) innerhalb eines durch die Positionierung der Schäfte (75) der Fixierungsstifte (73) in den Befestigungsöffnungen (72) definierten Bewegungsspielraums nicht dazu führt, dass eine der Befestigungsöffnungen (72) in den Bereich der Durchgangsöffnung (2) gelangt.

## Claims

1. A line penetration for routing a line (3) through a building part (1), especially a wall or a ceiling of a building, comprising:
- a closure plate (4) for covering a passage opening (2) in the building part (1), wherein the closure plate (4) has at least one line opening (5) for receiving the line (3);
- a fastening arrangement (7), which can be fastened to the building part, for holding the closure plate (4), so that a relative displacement of the closure plate (4) along a surface direction (F) of the closure plate (4) is permitted and the closure plate (4) is fixed perpendicular to the surface direction (F) of the closure plate (4),
**characterised in that** the fastening arrangement (7) comprises at least one fastening device (71), wherein the fastening device (71) has a fixation pin (73) with a shank (75) and a fixation head (74), wherein the shank (75) protrudes through a fastening opening (72) in the closure plate (4) and the fixation head (74) overlaps the fixation opening (72), in order to hold the closure plate (4).

2. A line penetration according to claim 1, wherein the line opening (5) is equipped with a sliding device (6), so that the line (3) is guided slidingly and gas-tightly through the line opening (5).

3. A line penetration according to claim 2, wherein the sliding device (6) has a coil of sliding film and/or a lubricant.

4. A line penetration according to one of claims 1 to 3, wherein the closure plate (4) is equipped at its rims or at it its rim regions with a lubricating and sealing means (8), in order to permit sealing between the closure plate (4) and a region of the building part as well as sliding of the closure plate (4).

5. A line penetration according to one of claims 1 to 4, wherein the closure plate (4) is circumferentially bent over at its rims.

6. A line penetration according to one of claims 1 to 5, wherein the cross section of the shank (75) is smaller than the cross section of the fastening opening (72).

7. A line penetration according to one of claims 1 to 6, wherein the fixation head (74) has a size such that it holds the closure plate (4) perpendicular to the surface direction (F) of the closure plate (4) even when the shank (75) is disposed on a rim of the fastening opening (72).

8. A line penetration according to one of claims 1 to 7, wherein the fixation head (74) is cruciate, circular, oval, polygonal or rectangular, and/or wherein the fastening opening (72) has a round, oval, rectangular or polygonal cross section.

9. A line-penetration arrangement, comprising:
- a building part (1) with a passage opening (2);
- a line penetration according to one of claims 1 to 9 on one side of the building part (1);
wherein the fastening arrangement (7) is permanently joined to the building part (1).

10. A line-penetration arrangement, comprising:
- a building part (1) with a passage opening (2);
- several line penetrations according to one of claims 1 to 9 on several sides of the building part (1);
wherein the fastening arrangement (7) is permanently joined to the building part (1).

11. A line-penetration arrangement according to claim 10, wherein an intermediate space is provided as a cavity (9) between the closure plates (4) of the several line penetrations or is filled at least partly with a fire-retardant or incombustible filling material (10).

12. A line-penetration arrangement according to one of claims 9 to 11, wherein the fastening openings (72) are so disposed in the closure plate (4) that a displacement of the closure plate (4) within movement limits defined by the positioning of the shanks (75) of the fixation pins (73) in the fastening openings (72) does not cause any of the fastening openings (72) to reach into the region of the passage opening (2).

## Revendications

1. Passage de conduite destiné à faire passer une conduite (3) à travers un élément de construction (1), en particulier un mur ou un plafond d'un bâtiment, comportant :
- une plaque d'obturation (4) pour recouvrir une ouverture de passage (2) dans l'élément de construction (1), la plaque d'obturation (4) comportant au moins un orifice de conduite (5) pour recevoir la conduite (3),
- un système de fixation (7) pouvant être fixé sur l'élément de construction pour maintenir la plaque d'obturation (4), de telle sorte qu'un déplacement relatif de la plaque d'obturation (4) le long d'une direction de surface (F) de la plaque d'obturation (4) est permise et la plaque d'obturation (4) est fixée perpendiculairement à la direction de surface (F) de la plaque d'obturation (4),
**caractérisé en ce que** le système de fixation (7) comprend au moins un dispositif de fixation (71), dans lequel le dispositif de fixation (71) comporte une broche de fixation (73) munie d'une tige (75) et d'une tête de fixation (74), dans lequel la tige (75) fait saillie dans la plaque d'obturation (4) à travers un orifice de fixation (72) et la tête de fixation (74) recouvre l'orifice de fixation (72) afin de maintenir la plaque d'obturation (4).

2. Passage de conduite selon la revendication 1, dans lequel l'orifice de conduite (5) est pourvu d'un dispositif de glissement (6), de telle sorte que la conduite (3) est guidée à travers l'orifice de conduite (5) de manière glissante et imperméable aux gaz.

3. Passage de conduite selon la revendication 2, dans lequel le dispositif de glissement (6) comporte un enroulement de film lubrifiant et/ou des moyens de glissement.

4. Passage de conduite selon l'une des revendications 1 à 3, dans lequel la plaque d'obturation (4) est munie, au niveau de ses bords ou de ses zones de bordure, de moyens de glissement et d'étanchéité (8), afin de réaliser une étanchéité entre la plaque d'obturation (4) et une zone de l'élément de construction et de permettre un glissement de la plaque d'obturation (4).

5. Passage de conduite selon l'une des revendications 1 à 4, dans lequel la plaque d'obturation (4) est pliée de manière circonférentielle au niveau de ses bords.

6. Passage de conduite selon l'une des revendications 1 à 5, dans lequel la section transversale de la tige (75) est plus petite que la section transversale de l'orifice de fixation (72).

7. Passage de conduite selon l'une des revendications 1 à 6, dans lequel la tête de fixation (74) a une taille telle qu'elle maintient également la plaque d'obturation (4) perpendiculairement à la direction de surface (F) de la plaque de obturation (4) lorsque la tige (75) se situe sur un bord de l'orifice de fixation (72) .

8. Passage de conduite selon l'une des revendications 1 à 7, dans lequel la tête de fixation (74) est cruciforme, circulaire, ovale, polygonale ou rectangulaire, et/ou dans lequel l'orifice de fixation (72) a une section transversale ronde, ovale, rectangulaire ou polygonale.

9. Système de passage de conduite comportant :
- un élément de construction (1) avec une ouverture de passage (2) ;
- un passage de conduite selon l'une des revendications 1 à 8 sur un côté de l'élément de construction (1),
dans lequel le système de fixation (7) est fixement relié à l'élément de construction (1).

10. Système de passage de conduite comportant :
- un élément de construction (1) avec une ouverture de passage (2),
- plusieurs passages de conduite selon l'une des revendications 1 à 8 sur plusieurs côtés de l'élément de construction (1),
dans lequel le système de fixation (7) est fixement relié à l'élément de construction (1).

11. Système de passage de conduite selon la revendication 10, dans lequel un espace entre les plaques d'obturation (4) de plusieurs passages de conduite est prévu sous la forme d'une cavité (9) ou est rempli au moins en partie avec un matériau de remplissage coupe-feu ou non combustible (10).

12. Système de passage de conduite selon l'une des revendications 9 à 11, dans lequel les orifices de fixation (72) sont agencés dans la plaque d'obturation (4) de telle sorte qu'un déplacement de la plaque d'obturation (4) dans les limites d'un jeu de déplacement défini par le positionnement des tiges (75) des broches de fixation (73) dans les orifices de fixation (72) n'entraîne pas que l'un des orifices de fixation (72) arrive dans la zone de l'ouverture de passage (2).
